# EUROPÄISCHE PATENTSCHRIFT

(11) **EP 1 333 066 B1**
(45) Veröffentlichungstag und Bekanntmachung des Hinweises auf die Patenterteilung: **20.07.2005**
(21) Anmeldenummer: 02002414.7
(22) Anmeldetag: 01.02.2002
(51) Int. Cl.: C09D 5/02, C09D 133/06, E04F 13/00

(54) **Verwendung einer streichfähigen Farbe für Innenanstriche oder Aussenanstriche oder Dachbeschichtungen von Gebäuden und Verfahren zur Beschichtung einer Gebäudewand**
Use of a brushable paint for inside or outside coatings or roof coatings of buildings and process for coating a building wall
Utilisation d'une peinture applicable au pinceau sur des murs interieurs, exterieurs ou sur des toits et procédé pour peindre un mur.

(43) Veröffentlichungstag der Anmeldung: 06.08.2003
(73) Patentinhaber: Gross, Nicole; Diplom-Kauffrau, 46119 Oberhausen (DE)
(72) Erfinder: Gross, Nicole; Diplom-Kauffrau, 46119 Oberhausen (DE)
(74) Vertreter: Rohmann, Michael, Dr.

(56) Entgegenhaltungen:
- EP-A- 0 492 087
- EP-A- 0 971 007
- DE-A- 3 433 617
- DE-U- 20 111 670
- FALBE J ET AL: "ROEMPP CHEMIE LEXIKON," , STUTTGART, THIEME VERLAG, DE, VOL. BD. 1 XP002191702 * Seite 40 * * Stichwort "Acrylate" *
- EYTH & MEYER: "Die Dekorationsmalerei mit besonderer Berücksichtigung der kunstgewerblichen Seite - 3. Auflage, erster Band" 1899 , VERLAG E.A. SEEMANN , LEIPZIG DE XP002204003 * Kapitel 6 "Die Farbe " * * Seite 41 - Seite 50 * * vor allem Seite 50, letzter Satz *
- FALBE J ET AL: "ROEMPP CHEMIE LEXIKON," , STUTTGART, THIEME VERLAG, DE, XP002191703 * Seite 1298 - Seite 1299 * * Stichwort "Farbe " *
- MARGUERRE H: "BIONIK: VORM FARBEMPFINDEN ZUR OBJEKTIVEN FARBMESSUNG" ELEKTRONIK, FRANZIS VERLAG GMBH. MUNCHEN, DE, Bd. 39, Nr. 2, 19. Januar 1990 (1990-01-19), Seiten 65-68, XP000087477 ISSN: 0013-5658
- "OFFSETDRUCK/STANDARDISIERUNG DIE SPEKTRALE FARBMESSUNG IM OFFSETDRUCK ERMOEGLICHT DIE BILDRELEVANTE FARBREGELUNG" DEUTSCHER DRUCKER, DEUTSCHER DRUCKER VERLAGSGESELLSCHAFT, OSTFILDERN, DE, Bd. 29, Nr. 12, 25. März 1993 (1993-03-25), Seiten W19-W26, XP000363767 ISSN: 0012-1096
- DATABASE WPI Section Ch, Week 200142 Derwent Publications Ltd., London, GB; Class A14, AN 1994-124218 XP002195753 & JP 03 189415 B (JAPAN SYNTHETIC RUBBER CO LTD), 16. Juli 2001 (2001-07-16)
- DATABASE WPI Section Ch, Week 200174 Derwent Publications Ltd., London, GB; Class A82, AN 1995-078206 XP002195754 & JP 03 228962 B (SK KAKEN KK), 12. November 2001 (2001-11-12)
- DATABASE WPI Section Ch, Week 200158 Derwent Publications Ltd., London, GB; Class A82, AN 2001-527927 XP002203698 & KR 2001 012 007 A (YOO J C), 15. Februar 2001 (2001-02-15)

## Beschreibung

Die Erfindung betrifft die Verwendung einer streichfähigen Farbe für Innenanstriche oder Außenanstriche oder Dachbeschichtungen von Gebäuden. Die Erfindung betrifft fernerhin ein Verfahren zur Beschichtung einer Gebäudewand mit einer streichfähigen Farbe. - Streichfähige Farbe meint, dass die Farbe im viskoseflüssigen verarbeitungsfähigen Zustand vorliegt.

Aus der Praxis ist eine Mehrzahl von streichfähigen Farben der eingangs genannten Art bekannt. Diese bekannten Farben genügen aber in der Regel in mehrfacher Hinsicht den Anforderungen nicht. Wenn mit diesen Farben eine Gebäudeaußenwand beschichtet wird, so ändert die Farbe in der Regel nichts daran, dass im Winter bzw. bei kälteren Außentemperaturen, eine unerwünschte Wärmeübertragung aus einem Innenraum des Gebäudes durch die Gebäudeaußenwand an die Außenumgebung stattfindet. Umgekehrt haben die bekannten Farben bei einer Innenbeschichtung und/oder Außenbeschichtung einer Gebäudeaußenwand wenig Einfluss darauf, dass sich bei hohen Außentemperaturen, beispielsweise im Sommer eine unerwünscht hohe Aufheizung der Innenräume einstellt. Wenn die Wände von Innenräumen mit den bekannten Farben beschichtet werden, lässt im Übrigen das Raumklima in dem jeweiligen Innenraum oftmals zu wünschen übrig, weil normalerweise bezüglich der Höhe des Innenraums eine ungleichmäßige Temperaturverteilung vorliegt. Mit den bekannten Farben erzeugte Beschichtungen weisen langfristig häufig relativ tiefe Risse auf. Im Übrigen lässt auch die Haftung der bekannten Farben zu wünschen übrig und eine solche Farbbeschichtung ist relativ anfällig gegenüber mechanischen Einflüssen bzw. Wettereinflüssen. Auch die Deckkraft der bekannten Farben ist verbesserungsbedürftig.

Aus KR 2001012007A ist eine Farbe bekannt, die 30 bis 60 Gew.-% einer Acrylatemulsion sowie 3 bis 35 Gew.-% Glashohlkugeln enthält. Diese Farbe soll Isoliereigenschaften haben und außerdem eine Taukondensation verhindern.

Weiterhin ist aus JP-A 6073311 eine Zusammensetzung bekannt, die zur Beschichtung von Metall- oder Kunststoffoberflächen geeignet ist. Beispielsweise kann mit der Mischung der Kraftstofftank eines Kraftfahrzeuges beschichtet werden. Diese Mischung enthält unter anderem einen Polyacrylatlatex sowie Glashohlkugeln. - Aus EP 0 492 087 A2 ist eine Beschichtungszusammensetzung für Tapeten bekannt, die ebenfalls Acrylat und Glashohlkugeln enthält. Diese vorgenannten Dokumente haben aber nichts mit der erfindungsgemäßen Verwendung gemeinsam.

Der Erfindung liegt das technische Problem zugrunde, die Verwendung einer Farbe anzugeben, mit der die eingangs aufgezeigten Nachteile der aus der Praxis bekannten streichfähigen Farben vermieden werden können und mit der Beschichtungen hergestellt werden können, mit denen insbesondere ein optimaler Wärmehaushalt und ein optimales Raumklima für Gebäuderäume verwirklicht werden kann.

Zur Lösung dieses technischen Problems lehrt die Erfindung die Verwendung einer streichfähigen Farbe für Innenanstriche oder Außenanstriche oder Dachbeschichtungen von Gebäuden,
wobei die Farbe 30 bis 60 Gew.-% zumindest eines Acrylates enthält und weiterhin Wasser enthält und im Übrigen lösemittelfrei ist, wobei die Farbe 2 bis 20 Gew.-% Glashohlkugeln enthält und
wobei 15 bis 25 Gew.-% Titandioxid und Carbonat enthalten sind und wobei der PH-Wert der Farbe 8,5 bis 9,5 beträgt. - Innenanstrich bzw. Außenanstrich meint die Beschichtung von Innenflächen bzw. Außenflächen von Gebäuden mit der erfindungsgemäßen streichfähigen Farbe. Dachbeschichtung meint die Außenbeschichtung eines Daches mit der streichfähigen Farbe. - Dass die Farbe lösemittelfrei ist, meint dass die Farbe keine organischen Lösemittel enthält oder organischen Lösemittel nur in vernachlässigbaren Mengen enthält. Lösemittelfrei meint insbesondere, dass der Gehalt an organischem Lösemittel in der Farbe kleiner als 1 Gew.-% ist, vorzugsweise kleiner als 0,5 Gew.-% ist. - Glashohlkugeln meint Hohlkugeln, deren Wandung aus Glas besteht. Zweckmäßigerweise liegt im Innern der Hohlkugel ein Vakuum vor. Es liegt im Rahmen der Erfindung, dass die streichfähige Farbe eine wässrige Acrylat-Dispersion enthält. Der pH-Wert der Farbe beträgt vorzugsweise 8,7 bis 9,3 und bevorzugt 8,8 bis 9,2. - Soweit oben und nachfolgend Gew.-%-Angaben aufgeführt werden, so beziehen sich diese Gew.-%-Angaben auf die fertige gesamte Farbe bzw. Farbmischung und zwar auf die flüssige streichfähige Farbe. Erfindungsgemäß enthält die streichfähige Farbe Füllstoffe, nämlich Titandioxid und Carbonate, insbesondere Calciumcarbonat. Es liegt im Rahmen der Erfindung, dass insgesamt 15 bis 25 Gew.-% dieser weiteren Füllstoffe in der streichfähigen Farbe enthalten sind.

Nach bevorzugter Ausführungsform der Erfindung sind in der streichfähigen Farbe 35 bis 55 Gew.-%, bevorzugt 37 bis 55 Gew.-% Acrylat enthalten. Nach einer sehr bevorzugten Ausführungsform sind in der Farbe 38 bis 54 Gew.-% Acrylat enthalten. - Es liegt im Rahmen der Erfindung, dass die streichfähige Farbe 2 bis 18 Gew.-% Glashohlkugeln enthält.

Der Erfindung liegt die Erkenntnis zugrunde, dass die streichfähige Farbe sich gegenüber den aus dem Stand der Technik bekannten Farben durch beachtliche Vorteile auszeichnet. Hervorzuheben sind zunächst die hervorragenden Rissüberbrückungseigenschaften der erfindungsgemäßen Farbe. Versprödungen, die bei bekannten Farben bereits nach relativ kurzen Zeiträumen feststellbar sind, sind bei Beschichtungen mit der erfindungsgemäßen Farbe nicht erkennbar. Dass tiefere Risse in einer erfindungsgemäßen Farbbeschichtung nicht auftreten, muss den Fachmann überraschen. Die Farbe zeichnet sich weiterhin durch eine exzellente Haftung aus sowie durch eine optimale Deckkraft. Außerdem ist stets eine hohe Farbbeständigkeit bzw. Farbbrillanz vorhanden. Auch bezüglich des Brandverhaltens zeichnet sich die Farbe durch Vorteile aus. Die Farbe ist überraschend schwer entflammbar. - Besondere Bedeutung kommt im Rahmen der Erfindung den nachfolgend behandelten jeweiligen speziellen Zusammensetzungen für die Innenfarbe, für die Außenfarbe und für die Dachbeschichtung zu.

Nach einer Ausführungsform der Erfindung wird die Farbe für Innenanstriche verwendet und dann sind 4 bis 17 Gew.-%, vorzugsweise 8 bis 17 Gew.-%, bevorzugt 11,5 bis 17 Gew.-% Glashohlkugeln in der Farbe enthalten. Diese Farbe für Innenanstriche (Innenwandfarbe) ist insbesondere für die innenseitige Beschichtung von Außenwänden bzw. Gebäudeaußenwänden geeignet. Die Viskosität der Farbe für Innenanstriche beträgt bei einem Schergefälle von 5 sek⁻¹ zweckmäßigerweise 8 bis 11 mPas, vorzugsweise 9 bis 10,6 mPas. Die streichfähige Farbe für Innenanstriche hat zweckmäßigerweise die folgende Zusammensetzung: Der Acrylat-Anteil dieser Farbe beträgt vorzugsweise 38 bis 53 Gew.-%, bevorzugt 40 bis 51 Gew.-%. Die Farbe für Innenanstriche enthält vorzugsweise 18 bis 26 Gew.-%, bevorzugt 20 bis 24 Gew.-% Wasser. Nach einem bevorzugten Ausführungsbeispiel beträgt der Anteil der Glashohlkugeln 12 bis 15 Gew.-% und der Acrylat-Anteil 40 bis 44 Gew.-% und der Anteil an Wasser 21 bis 25 Gew.-%. Durch besondere Vorteile zeichnet sich eine Innenwandfarbe aus, die mehr als 12 Gew.-%, bevorzugt mehr als 12,5 Gew.-% Glashohlkugeln enthält. - Die Innenwandfarbe wird vorzugsweise in einer Schichtdicke von 0,15 bis 0,5 mm, bevorzugt 0,2 bis 0,35 mm, sehr bevorzugt 0,25 bis 0,3mm aufgebracht. Schichtdicke bezieht sich hier auf den ausgehärteten Zustand der Farbe.

Die erfindungsgemäße Verwendung der streichfähigen Farbe für Innenanstriche zeichnet sich durch beachtliche Vorteile aus. Eine mit der Farbe erzeugte Innenbeschichtung sorgt für eine überraschend schnelle und gleichmäßige Wärmeverteilung in Innenräumen. Diese Innenräume zeichnen sich durch eine geringere Luftzirkulation und somit eine niedrigere Staubumwirbelung aus. Es resultiert eine wesentlich verbesserte Raumluftqualität. Insgesamt wird durch eine solche Farbbeschichtung das Raumklima des betreffenden Innenraumes beachtlich verbessert. Besonders bewährt hat sich die erfindungsgemäße Farbe für Innenanstriche für die innenseitige Beschichtung von Außenwänden bzw. Gebäudeaußenwänden. Hier wird eine überraschend gleichmäßige Wärmeverteilung in dem zugeordneten Innenraum sowie ein ausgezeichnetes Raumluftklima erzielt. Besonders überraschend ist auch die gleichmäßige Temperaturverteilung die an der Innenwand über die gesamte Höhe des Innenraumes erreicht wird. - Im Übrigen wirkt die Innenwandfarbe effektiv einer Schimmelpilzbildung entgegen und ist staub- und nikotinabweisend. Weiterhin zeichnet sich die Innenwandfarbe durch eine sehr leichte Verarbeitbarkeit aus. Nach einer bevorzugten Ausführungsform der Erfindung wird die Farbe für Außenanstriche bzw. für die äußere Beschichtung von Außenwänden verwendet und dann sind 2 bis 10 Gew.-%, vorzugsweise 2 bis 9 Gew.-%, bevorzugt 3 bis 8 Gew.-% Glashohlkugeln in der Farbe enthalten. Der Anteil an Acrylat in der Außenwandfarbe beträgt zweckmäßigerweise 43 bis 55 Gew.-%, vorzugsweise 44 bis 53 Gew.-% und bevorzugt 45 bis 52 Gew.-%. Die Außenwandfarbe enthält vorzugsweise 18 bis 26 Gew.-%, bevorzugt 20 bis 24 Gew.-% Wasser. Gemäß einem bevorzugten Ausführungsbeispiel enthält die Farbe für Außenanstriche bzw. für Außenwände 2 bis 6 Gew.-% Glashohlkugeln, einen Acrylat-Anteil von 47 bis 51 Gew.-% und 20 bis 24 Gew.-% Wasser. Die Außenwandfarbe wird zweckmäßigerweise in einer Schichtdicke von 0,15 bis 0,5 mm, bevorzugt von 0,2 bis 0,35 mm, sehr bevorzugt 0,25 bis 0,3 mm aufgebracht. Die Schichtdicke bezieht sich hier auf den ausgehärteten Zustand der Farbe.

Die erfindungsgemäße Verwendung der Farbe als Außenwandfarbe zeichnet sich ebenfalls durch beachtliche Vorteile aus. Eine mit der Farbe hergestellte Außenbeschichtung einer Außenwand absorbiert insbesondere bei tieferen Außentemperaturen, d. h. vor allem im Winter, auf effektive Weise die Sonnenstrahlung. Aufgrund dieser solaren Wärmegewinne kann der für die Innenräume erforderliche Heizenergiebedarf gesenkt werden. Andererseits überwiegen bei höheren Außentemperaturen, d. h. insbesondere im Sommer, die reflektierenden Eigenschaften der Außenbeschichtung. Dadurch wird eine unerwünschte Aufheizung der Innenräume vermieden und der entsprechende Kühlenergiebedarf kann gesenkt werden.

Hervorzuheben ist auch, dass die Außenwandfarbe überraschend UVbeständig und wetterbeständig ist. Mögliche Anhaftungen von Pilzen, Moosen und Algen an der Außenwand werden durch die Farbbeschichtung effektiv verhindert bzw. reduziert. Die Außenwandfarbe ist auch überraschend resistent gegen aggressive Umwelteinflüsse. Nach einer anderen bevorzugten Ausführungsform der Erfindung wird die streichfähige. Farbe als Dachbeschichtung verwendet und sie enthält dann zweckmäßigerweise 2 bis 12 Gew.-%, vorzugsweise 2 bis 8 Gew.-% Glashohlkugeln. Die Dachbeschichtungsfarbe wird vorzugsweise in einer Schichtdicke von 0,3 bis 1,5 mm, bevorzugt von 0,5 bis 1 mm aufgebracht. Die Schichtdicke bezieht sich hier auf den ausgehärteten Zustand der Farbe. Die Dachbeschichtungsfarbe enthält vorzugsweise 42 bis 55 Gew.-%, bevorzugt 43 bis 53 Gew.-% und sehr bevorzugt 45 bis 53 Gew.-% Acrylat. Der Wassergehalt in der Dachbeschichtungsfarbe beträgt vorzugsweise 19 bis 24 Gew.-%, bevorzugt 20 bis 24 Gew.-%. Nach einem bevorzugten Ausführungsbeispiel enthält die Dachbeschichtungsfarbe 2 bis 7 Gew.-% Glashohlkugeln, 48 bis 52 Gew.-% Acrylat und 21 bis 24 Gew.-% Wasser.

Auch die Dachbeschichtungsfarbe bzw. eine damit hergestellte Dachbeschichtung zeichnet sich durch besondere Vorteile aus. Die Dachbeschichtung reflektiert überraschend effektiv und dauerhaft Sonnenlicht und vermindert insbesondere bei hohen Außentemperaturen, beispielsweise an heißen Tagen im Sommer, die Aufheizung von unmittelbar unter dem beschichteten Dach befindlichen Wohnräumen. Die mit der Dachbeschichtungsfarbe hergestellte Beschichtung zeichnet sich im Übrigen durch eine hervorragende UV-Beständigkeit und Wetterbeständigkeit aus. Vermoosungen des beschichteten Daches werden durch die Farbe effektiv verhindert bzw. reduziert. Hervorzuheben ist, dass die erfindungsgemäß erzeugte Dachbeschichtung überraschend alterungsbeständig ist.

Es liegt im Rahmen der Erfindung, dass im Inneren der Glashohlkugeln ein Vakuum vorliegt. Die Wandstärke der Glashohlkugeln beträgt vorzugsweise 0,3 bis 5 µm, bevorzugt 0,5 bis 3,5 µm, sehr bevorzugt 0,5 bis 3 µm. Zweckmäßigerweise weisen die Glashohlkugeln einen Durchmesser von 2 bis 150 µm, bevorzugt von 5 bis 150 µm und sehr bevorzugt von 10 bis 140 µm auf. Durchmesser meint hier den Außendurchmesser. Nach bevorzugter Ausführungsform weisen zumindest 50 Vol.-% der Glashohlkugeln einen Durchmesser zwischen 10 und 70 µm, vorzugsweise zwischen 20 und 70 µm auf. Vorzugsweise bestehen die Glashohlkugeln aus Natronkalk-Borosilikat-Glas. - Nach sehr bevorzugter Ausführungsform der Erfindung beträgt die Dichte der Glashohlkugeln 0,2 bis 0,3 g/cm³. Vorzugsweise beträgt die Dichte der Glashohlkugeln 0,22 bis 0,28 g/cm³, insbesondere 0,25 g/cm³. Dichte meint hier die durchschnittliche Teilchendichte.

In einer mit der erfindungsgemäßen Farbe hergestellten Beschichtung sind die Glashohlkugeln gleichsam in einer Polymer-Matri eingebettet. Die Glashohlkugeln liegen homogen verteilt in dieser Polymer-Matrix vor. Der resultierende Verbundwerkstoff gewährleistet die beachtlichen Vorteile der Beschichtung, insbesondere auch die optimale Haftung und Rissüberbrückung.

Gegenstand der Erfindung ist auch ein Verfahren zur Beschichtung einer Gebäudewand insbesondere einer Gebäudeaußenwand, mit der streichfähigen Farbe, wobei die streichfähige Farbe beidseitig auf die Gebäudewand aufgebracht wird. Beidseitiges Aufbringen meint bei einer Gebäudeaußenwand, dass die Gebäudeaußenwand sowohl innenseitig als auch außenseitig mit der streichfähigen Farbe beschichtet wird. Nach sehr bevorzugter Ausführungsform der Erfindung wird die streichfähige Farbe beidseitig mit einer Schichtdicke von 0,15 bis 0,6 mm aufgetragen. Die Schichtdicke bezieht sich hier auf den ausgehärteten Zustand der Farbe. - Gegenstand der Erfindung ist auch eine Gebäudewand, insbesondere eine Gebäudeaußenwand, die beidseitig mit der erfindungsgemäßen streichfähigen Farbe beschichtet ist.

Eine beidseitig mit der Farbe beschichtete Gebäudeaußenwand zeichnet sich durch ganz beachtliche überraschende Vorteile aus. Sowohl der Wärmehaushalt als auch der Feuchtehaushalt der zugeordneten Innenräume können aufgrund der Farbbeschichtungen effektiv reguliert werden und die betreffenden Innenräume zeichnen sich durch ein beachtlich verbessertes Raumklima aus. - Mit der erfindungsgemäß beidseitig beschichteten Wand wird im Winter eine überraschend starke Senkung des Energiebedarfs für die zugeordneten Innenräume erreicht. Das resultiert einerseits daraus, dass bei tieferen Außentemperaturen eine mit der erfindungsgemäßen Farbe hergestellte Außenbeschichtung die Sonnenstrahlung auf effektive Weise absorbiert.

Durch diese solaren Wärmegewinne kann der Energiebedarf für die Innenräume reduziert werden. Andererseits bedingt die erfindungsgemäße Beschichtung der Wand, dass die Wärmeübertragung aus den Innenräumen an die Außenumgebung beachtlich vermindert werden kann. Vor allem bei tieferen Außentemperaturen, d. h. insbesondere im Winter, können also Wärmeverluste erheblich reduziert werden. Bei höheren Außentemperaturen, d. h. insbesondere im Sommer, überwiegen die reflektierenden Eigenschaften der Außenbeschichtung. Aufgrund dieser reflektierenden Eigenschaften findet eine unerwünscht hohe Aufheizung der Innenräume nicht statt und insoweit kann auch der Kühl-Energiebedarf für die Innenräume gesenkt werden.

## Patentansprüche

1. Verwendung einer streichfähigen Farbe für Innenanstriche oder Außenanstriche oder Dachbeschichtungen von Gebäuden,
wobei die Farbe 30 bis 60 Gew.-% zumindest eines Acrylates enthält und weiterhin Wasser enthält und im Übrigen lösemittelfrei ist,
wobei die Farbe 2 bis 20 Gew.-% Glashohlkugeln enthält
und wobei 15 bis 25 Gew.-% Titandioxid und Carbonat enthalten sind und wobei der pH-Wert der Farbe 8,5 bis 9,5 beträgt.

2. Verwendung nach Anspruch 1, wobei die Farbe für Innenanstriche eingesetzt wird und 4 bis 17 Gew.-%, vorzugsweise 11,5 bis 17 Gew.-% Glashohlkugeln enthält.

3. Verwendung nach Anspruch 1, wobei die Farbe für Außenanstriche eingesetzt wird und 2 bis 10 Gew.-%, vorzugsweise 3 bis 8 Gew.-% Glashohlkugeln enthält.

4. Verwendung nach Anspruch 1, wobei die Farbe als Dachbeschichtung eingesetzt wird und 2 bis 12 Gew.-%, vorzugsweise 2 bis 8 Gew.-% Glashohlkugeln enthält.

5. Verwendung nach einem der Ansprüche 1 bis 4, wobei zumindest 50 Vol.-% der Glaskohlkugeln einen Durchmesser zwischen 20 und 70 µm aufweisen.

6. Verwendung nach einem der Ansprüche 1 bis 5, wobei die Dichte der Glashohlkugeln 0,2 bis 0,3 g/cm³ beträgt.

7. Verfahren zur Beschichtung einer Gebäudewand mit einer streichfähigen Farbe nach einem der Ansprüche 1 bis 3 oder 5 und 6, wobei die streichfähige Farbe beidseitig auf die Gebäudewand aufgebracht wird.

8. Verfahren nach Anspruch 7, wobei die Farbe mit einer Schichtdicke von 0,15 bis 0,6 mm aufgetragen wird.

## Claims

1. Use of a coatable paint for interior painting or exterior painting or coating roofs of buildings,
wherein the paint contains 30 to 60 wt.% of at least one acrylate and furthermore contains water and is otherwise solvent-free,
wherein the paint contains 2 to 20 wt.% of hollow glass balls,
and wherein 15 to 25 wt.% of titanium dioxide and carbonate are also contained and wherein the pH of the paint is 8.5 to 9.5.

2. The use according to claim 1, wherein the paint is used for interior painting and contains 4 to 17 wt.%, preferably 11.5 to 17 wt.% of hollow glass balls.

3. The use according to claim 2, wherein the paint is used for exterior painting and contains 2 to 10 wt.%, preferably 3 to 8 wt.% of hollow glass balls.

4. The use according to claim 1, wherein the paint is used for coating roofs and contains 2 to 12 wt.%, preferably 2 to 8 wt.% of hollow glass balls.

5. The use according to any one of claims 1 to 4, wherein at least 50 vol.% of the hollow glass balls have a diameter between 20 and 70 µm.

6. The use according to any one of claims 1 to 5, wherein the density of the hollow glass balls is 0.2 to 0.3 g/cm³.

7. A method for coating a building wall with a coatable paint according to any one of claims 1 to 3 or 5 and 6, wherein the coatable paint is applied to both sides of the building wall.

8. The method according to claim 7, wherein the paint is applied with a layer thickness of 0.15 to 0.6 mm.

## Revendications

1. Utilisation d'une peinture applicable au pinceau pour peintures intérieures ou extérieures ou pour revêtements de toitures de bâtiments,
la peinture contenant 30 à 60 % en poids au moins d'un acrylate et contenant en outre de l'eau et étant par ailleurs exempte de solvant,
la peinture contenant 2 à 20 % en poids de billes creuses de verre et
15 à 25 % en poids de dioxyde de titane et de carbonate étant contenus et le pH de la peinture étant de 8,5 à 9,5.

2. Utilisation selon la revendication 1, la peinture étant mise en oeuvre pour peintures intérieures et contenant 4 à 17 % en poids, de préférence 11,5 à 17 % en poids de billes creuses de verre.

3. Utilisation selon la revendication 1, la peinture étant mise en oeuvre pour peintures extérieures et contenant 2 à 10 % en poids, de préférence 3 à 8 % en poids de billes creuses de verre.

4. Utilisation selon la revendication 1, la peinture étant mise en oeuvre en tant que revêtement de toiture et contenant 2 à 12 % en poids, de préférence 2 à 8 % en poids de billes creuses de verre.

5. Utilisation selon l'une des revendications 1 à 4, au moins 50 % en volume des billes creuses de verre présentant un diamètre compris entre 20 et 70 µm.

6. Utilisation selon l'une des revendications 1 à 5, la densité des billes creuses de verre étant de 0,2 à 0,3 g/cm³.

7. Procédé pour revêtir un mur de bâtiment d'une peinture applicable au pinceau selon l'une des revendications 1 à 3 ou 5 et 6, la peinture applicable au pinceau étant appliquée des deux côtés sur le mur de bâtiment.

8. Procédé selon la revendication 7, la peinture étant appliquée avec une épaisseur de couche de 0,15 à 0,6 mm.
